(19) **Europäisches Patentamt**
**European Patent Office**
**Office européen des brevets**

(11) Numéro de publication : **0 301 955 B1**

(12) # FASCICULE DE BREVET EUROPEEN

(45) Date de publication du fascicule du brevet :
**21.08.91 Bulletin 91/34**

(51) Int. Cl.⁵ : **F02K 1/70**

(21) Numéro de dépôt : **88401937.3**

(22) Date de dépôt : **26.07.88**

(54) Inverseur de poussée de turboréacteur muni d'un dispositif redresseur de flux.

(30) Priorité : **29.07.87 FR 8710730**

(43) Date de publication de la demande :
**01.02.89 Bulletin 89/05**

(45) Mention de la délivrance du brevet :
**21.08.91 Bulletin 91/34**

(84) Etats contractants désignés :
**AT BE CH DE ES FR GB GR IT LI LU NL SE**

(56) Documents cités :
**FR-A- 2 486 153**
**FR-A- 2 490 731**
**FR-A- 2 506 843**
**FR-A- 2 559 838**
**GB-A- 2 156 004**

(56) Documents cités :
**US-A- 3 815 357**
**MACHINE DESIGN, vol. 55, no. 2, janvier 1983, pages 78,79, Cleveland, Ohio, US; G.H. McLAFFERTY: "New thrust control may boost fighter maneuverability"**

(73) Titulaire : **HISPANO-SUIZA Société anonyme dite:**
**333, Bureaux de la Colline**
**F-92213 Saint Cloud (FR)**

(72) Inventeur : **Belbouche, Lionel Albert**
**3, Résidence queue du Gril Gainneville**
**F-76700 Harfleur (FR)**

(74) Mandataire : **Moinat, François**
**S.N.E.C.M.A. Service des Brevets Boîte Postale 81**
**F-91003 Evry Cédex (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne un inverseur de poussée pour un turboréacteur du type à double flux.

Ce type de turboréacteur comporte, d'une part, une structure centrale de moteur formant un canal primaire de circulation des gaz dits de flux primaire ou flux chaud qui constitue une veine principale d'éjection et, d'autre part, un canal annulaire, coaxial au précédent formant un canal secondaire de gaz dits de flux secondaire ou flux froid généré par exemple, en amont, par une soufflante et qui constitue une veine secondaire d'éjection. Ledit canal de flux secondaire est délimité par une paroi extérieure qui sépare le flux secondaire du flux extérieur au moteur et par une paroi intérieure constituée par l'enveloppe de ladite structure centrale de moteur.

Dans les applications aéronautiques, notamment civiles, de ce type de moteur pour lesquelles un taux de dilution de flux secondaire élevé est utilisé, l'inversion de poussée est appliquée principalement ou uniquement au flux froid. Dans ce cas, l'inverseur de poussée peut notamment être intégré dans la structure de la paroi extérieure du canal secondaire.

De tels dispositifs connus d'inversion de poussée comportent généralement une série d'éléments déplaçables qui, dans une position de poussée directe, séparent le flux secondaire du flux extérieur au moteur et, dans une position d'inversion de poussée, dévient le flux secondaire à contre-courant du flux extérieur, à travers l'ouverture dégagée dans la paroi extérieure du canal secondaire par leur déplacement, en même temps qu'ils assurent une obturation du canal secondaire.

Des exemples de réalisation de tels inverseurs de poussée sont montrés par FR-A-2490731 où des éléments déplaçables sont constitués par deux coquilles mobiles en rotation autour d'un axe. Les éléments déplaçables peuvent également être constitués d'une pluralité de volets déviateurs ou pétales ou encore des portes sont utilisées, comme le montrent FR-A-2486153, FR-A-2506843 ou FR-A-2559838. Dans ce dernier cas d'utilisation de portes, il est habituel d'adjoindre, à l'extrémité amont de porte, un déflecteur destiné à canaliser l'écoulement inversé. La recherche de performances suffisantes en inversion de jet impose une longueur minimale de ce déflecteur par rapport à la paroi interne d'une porte. Il en résulte que par rapport à la ligne théorique qui prolonge la paroi aérodynamique de veine du flux secondaire constituée par la paroi fixe extérieure amont du canal secondaire, une cavité est formée entre la paroi interne de porte et ladite paroi théorique de veine. L'écoulement est par conséquent dirigé dans cette cavité, lorsque la porte se trouve en position fermée, engendrant des pertes aérodynamiques néfastes au rendement du turboréacteur, dans les phases de fonctionnement correspondant à la poussée directe.

Le but de l'invention est d'apporter une solution à ce problème qui n'en a pas reçu de satisfaisante dans les dispositions ci-dessus.

Ces buts sont atteints par un inverseur de poussée de turboréacteur caractérisé en ce que ledit déflecteur d'un élément déplaçable en position fermée est placé en aval d'un bord de déviation solidaire de la partie amont de l'inverseur et comporte à son extrémité radialement interne une partie profilée orientée en direction aval suivant un profil voisin de la ligne théorique de délimitation aérodynamique de la veine secondaire de circulation des gaz constituant le flux secondaire, une cavité formée entre ladite ligne théorique et ledit panneau interne étant bouchée seulement en partie et du côté amont par ladite partie profilée. Avantageusement, le déflecteur comporte des ouvertures réglant le débit du flux inverse et éventuellement associées à des ouïes d'orientation du flux qui peuvent être ajustables.

L'invention permet ainsi d'obtenir un redressement du flux secondaire, en position de poussée directe, en évitant une pénétration du flux dans la cavité formée du côté de la paroi interne de l'élément déplaçable de l'inverseur de poussée, tout en assurant, en position d'inversion de poussée un réglage optimal du débit de flux inversé et son orientation suivant une direction compatible avec les performances d'inversion requises dans l'application considérée.

D'autres caractéristiques et avantages seront mieux compris à la lecture qui va suivre de la description d'un mode de réalisation de l'invention, en référence aux dessins annexés sur lesquels :

— la figure 1 représente une demi-vue schématique, en coupe longitudinale par un plan passant par l'axe de rotation d'un turboréacteur, d'une porte d'inverseur de poussée conforme à l'invention, en position fermée et intégré à la paroi externe du canal de flux secondaire ;

— la figure 2 montre un schéma de porte d'inverseur de poussée conforme à l'invention en position déployée et comportant des ouvertures ;

— la figure 3 montre un schéma analogue à la figure 2 d'une porte d'inverseur de poussée conforme à l'invention, en position déployée, comportant des ouvertures équipées d'ouïes.

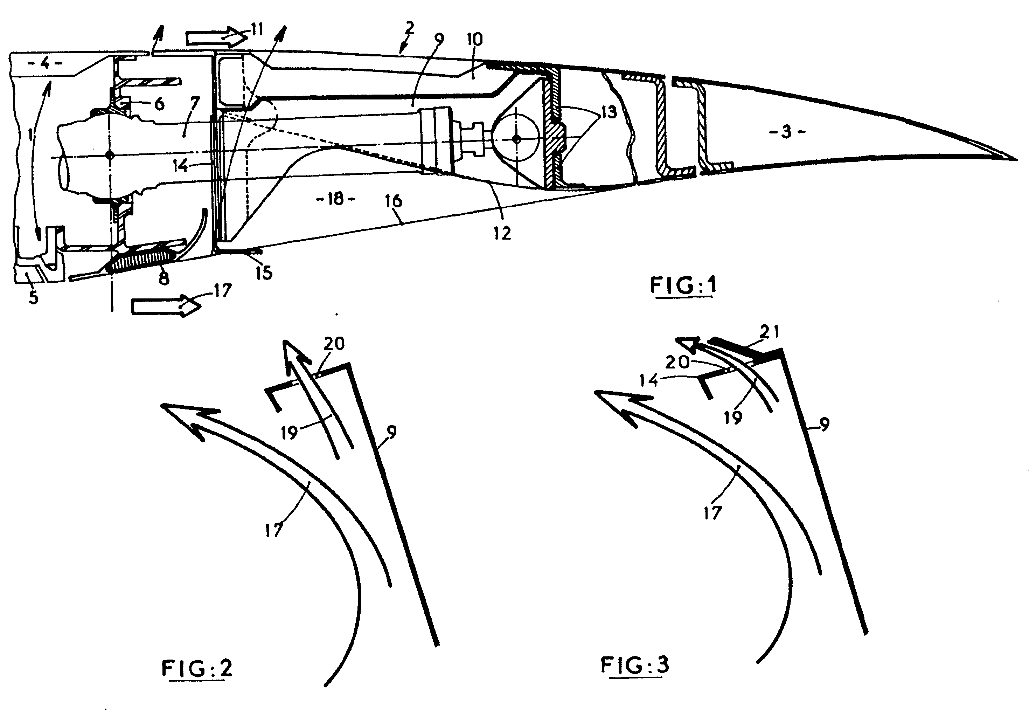

L'inverseur de poussée de turboréacteur représenté aux figures 1 à 3 est du type à portes constituant les éléments déplaçables de l'inverseur et se compose de trois parties principales, une partie fixe 1 située en amont, dans le prolongement de la paroi interne du canal de flux secondaire ménagé entre ladite paroi et l'enveloppe de structure centrale du turboréacteur, une partie mobile 2 et une virole arrière fixe 3. Ladite partie fixe 1 amont comprend un panneau externe 4 de nacelle, un panneau externe 5 de veine du flux secondaire et un cadre avant 6 qui assure la jonction desdits panneaux 4 et 5. Ledit cadre avant 6 sert également de support au dispositif de commande des déplacements de la partie mobile 2 qui comporte notamment des vérins tels que 7. En aval, amont et aval étant toujours définis par rapport au sens normal de circulation des gaz en poussée directe, la partie fixe 1 se termine par un bord de déviation 8, fixé sous le cadre avant 6 et destiné à assurer une orientation adéquate de l'écoulement, en position d'inversion de poussée. La partie mobile 2 se compose de plusieurs portes 9 déplaçables sous l'action des vérins 7. Chaque porte 9 est composée d'un panneau externe 10, venant se placer en position fermée dans le prolongement du panneau externe 4 de la partie fixe 1 pour constituer la paroi aérodynamique continue limitant le flux extérieur au moteur représenté par la flèche 11, d'un panneau interne 12, d'une structure intérieure 13, assurant la liaison entre lesdits panneaux 10 et 12 et d'un ensemble de déflecteurs destinés à canaliser l'écoulement inversé lorsque l'inverseur se trouve en position d'inversion de poussée et la porte 9 en position ouverte ou déployée. Ladite structure intérieure 13 porte notamment les points de jonction de la tige du vérin 7. L'ensemble des déflecteurs de la porte 9 comporte notamment un déflecteur 14 qui est remarquable selon l'invention. Dans un plan longitudinal par rapport au turboréacteur, comme représenté à la figure 1, le déflecteur 14 de la porte 9 d'inverseur de poussée est situé légèrement décalé vers l'aval par rapport au bord de déviation 8 de la partie fixe amont 1, lorsque la porte 9 se trouve en position fermée correspondant à la position de poussée directe de l'inverseur. Dans cette position, l'extrémité radialement interne du déflecteur 14 se termine par un prolongement 15 présentant une forme profilée qui est orientée en direction aval suivant un profil voisin de la ligne théorique, pour redresser le flux secondaire suivant un profil le plus proche possible de la ligne théorique représentée en 16, correspondant à l'enveloppe de délimitation aérodynamique de la veine du flux secondaire des gaz, représenté par la flèche 17 et qui circule dans le canal secondaire du turboréacteur, par exemple à partir d'une soufflante (non représentée) placée à l'entrée du turboréacteur. Le panneau interne 12 de la porte 9 afin d'assurer en position d'inversion de poussée de ladite porte des performances suffisantes doit s'écarter de la ligne théorique 16, créant ainsi une cavité 18 à l'intérieur de la porte 9 lorsque ladite porte se trouve en position fermée correspondant à la position de poussée directe de l'inverseur, comme elle est représentée à la figure 1.

Dans l'inverseur de poussée conforme à l'invention représenté à la figure 1, les positions relatives du bord de déviation 8 et du déflecteur 14 ainsi que l'adjonction conforme à l'invention d'un prolongement 15 à forme profilée selon la direction choisie à l'extrémité interne du déflecteur 14 permettent d'éviter la distorsion de flux et les perturbations qui proviendraient de l'entrée dans la cavité 18 du flux secondaire 17. Au contraire, par les dispositions de l'invention, ce flux secondaire 17 est astreint à un écoulement limité extérieurement par une enveloppe proche de l'enveloppe aérodynamique théorique de la ligne 16.

Les dispositions particulières de déflecteur conformes à l'invention qui viennent d'être décrites dans un mode de réalisation d'inverseur de poussée de turboréacteur comportant des portes basculantes sont applicables à tout type d'inverseur comportant des éléments basculants, notamment lorsque ceux-ci sont constitués par des coquilles.

Il peut résulter, dans certaines applications, des effets combinés de l'allongement du déflecteur et du prolongement profilé de l'extrémité du déflecteur une réduction sensible du débit inversé, en position d'inversion de poussée de l'inverseur. Dans ce cas, comme représenté schématiquement à la figure 2, afin d'obtenir un réglage optimal du débit inversé dont la partie ajustable est représentée par la flèche 19, des ouvertures 20 sont pratiquées dans le déflecteur 14 de la porte 9 d'inverseur. En outre, comme représenté schématiquement à la figure 3, lorsqu'il est avantageux de rechercher une direction optimale compatible avec les performances d'inversion requises dans l'application considérée, les ouvertures 20 sont équipées d'ouïes 21 qui peuvent être fixes ou ajustables en fonction de l'effet recherché.

## Revendications

1. Inverseur de poussée de turboréacteur comportant des éléments déplaçables (9) susceptibles en position fermée de s'intégrer dans la paroi extérieure de canal secondaire annulaire et en position déployée de dévier le flux secondaire, chaque élément déplaçable (9) étant constitué au moins d'un panneau externe (10), d'un panneau interne (12), d'une structure de liaison (13) desdits panneaux (10, 12) et portant au moins à son bord amont un élément disposé suivant une orientation générale perpendiculaire audit panneau externe (10) et à l'axe géométrique de l'inverseur en position fermée, de manière à constituer un déflecteur (14) canalisant l'écoulement inversé vers l'amont caractérisé en ce que ledit déflecteur (14) d'un élément déplaçable (9) en position fermée est placé en aval d'un bord de déviation (8) solidaire de la partie fixe amont (1) de l'inverseur et comporte à son extrémité radialement interne une partie profilée (15) orientée en direction aval suivant un profil voisin de la ligne théorique (16) de délimitation aérodynamique de la veine secondaire de circulation des gaz constituant le flux secondaire, une cavité (18) formée entre ladite ligne théorique (16) et ledit panneau interne (12) étant bouchée seulement en partie et du côté amont par ladite partie profilée (15).

2. Inverseur de poussée selon la revendication 1 caractérisé en ce que ledit déflecteur (14) d'élément déplaçable (9) comporte des ouvertures (20) réglant le débit du flux inversé lorsque l'élément déplaçable (9) est en position déployée correspondant à l'inversion de poussée.

3. Inverseur de poussée selon la revendication 2 caractérisé en ce que lesdites ouvertures (20) de déflecteur (14) sont associées à des ouïes (21) portées par le déflecteur (14) de manière à orienter la partie de flux inversé traversant lesdits ouvertures (20) selon une direction recherchée.

4. Inverseur de poussée selon la revendication 3 caractérisé en ce que lesdites ouïes (21) de déflecteur sont articulées de manière à être ajustables selon la direction optimale recherchée d'orientation du flux inversé.

## Patentansprüche

1. Schubumkehrvorrichtung für Strahltriebwerke mit beweglichen Elementen (9), die sich in geschlossener Position in die Außenwand des ringförmigen Sekundärkanals einfügen und in ausgebreiteter Position den Sekundärstrom umlenken können, wobei jedes dieser beweglichen Elemente (9) aus wenigstens einer äußeren Platte (10), einer inneren Platte (12) und einer Struktur (13) zur Verbindung der Platten (9, 12) besteht und zumindest an ihrem stromaufwärtigen Rand ein Element trägt, das in der geschlossenen Position in einer zu der äußeren Platte (10) und zur geometrischen Achse der Schubumkehrvorrichtung im wesentlichen senkrechten Richtung angeordnet ist, so daß es einen Deflektor bildet, der die invertierte Strömung in die stromaufwärtige Richtung lenkt, **dadurch gekennzeichnet,** daß der Deflektor (14) eines beweglichen Elements (9) in geschlossener Position stromabwärts einer mit dem festen stromaufwärtigen Teil (1) der Schubumkehrvorrichtung fest verbundenen Umlenkkante (8) liegt und an seinem radial inneren Ende ein Profilteil (15) aufweist, das in stromabwärtiger Richtung nach einem benachbarten Profil der theoretischen aerodynamischen Begrenzungslinie (16) der den Sekundärstrom bildenden sekundären Gaszirkulationsströmung ausgerichtet ist, wobei ein zwischen der genannten theoretischen Linie (16) und der inneren Platte (12) ausgebildeter Hohlraum (18) nur teilweise und auf der stromaufwärtigen Seite durch das genannte Profilteil (15) verschlossen ist.

2. Schubumkehrvorrichtung nach Anspruch 1, dadurch gekennzeichnet, daß der Deflektor (14) des beweglichen Elements (9) Öffnungen (20) aufweist, die den Durchsatz der invertierten Strömung regulieren, wenn das bewegliche Element (9) sich in der der Schubumkehr entsprechenden ausgebreiteten Position befindet.

3. Schubumkehrvorrichtung nach Anspruch 2, dadurch gekennzeichnet, daß den Öffnungen (20) des Deflektors (13) Leitelemente (21) zugeordnet sind, die an dem Deflektor (14) so angeordnet sind, daß sie den durch die Öffnungen (20) hindurchtretenden Teil der invertierten Strömung in einer gewünschten Richtung lenken.

4. Schubumkehrvorrichtung nach Anspruch 3, dadurch gekennzeichnet, daß die Leitelemente (21) des Deflektors so angelenkt sind, daß sie entsprechend der optimalen gewünschten Orientierungsrichtung der invertierten Strömung einstellbar sind.

## Claims

1. Thrust reverser for a turbojet engine comprising movable elements (9) capable when in the closed position of integrating themselves in the outer wall of the secondary annular channel and when in the deployed position of diverting the secondary flow, each movable element (9) being made up of at least one outer panel (10), one inner panel (12), a structure (13) to connect the said panels (10, 12) and carrying at least on its upstream edge an element arranged to follow an orientation generally perpendicular to the said outer panel (10) and to the geometrical axis of the thrust reverser in the closed position, in such a way as to constitute a deflector (14) channelling the reversed flow in an upstream direction characterised in that the said deflector (14) of a movable element (9) in the closed position is placed downstream of a flow diverting lip (8) fixed to the fixed upstream part (1) of the thrust reverser and comprises at its radially inner tip a profiled part (15) orientated in a downstream direction in accordance with a profile closely matching the theoretical line (16) of aerodynamic delimitation of the secondary flow of circulation of the gases constituting the secondary flow, a cavity (18) formed between the said theoretical line (16) and the said inner panel (13) being closed off only in part and on the upstream side by the said profiled part (15).

2. Thrust reverser in accordance with Claim 1 characterised in that the said deflector (14) of the movable element (9) comprises apertures (20) regulating the output of the reversed flow when the movable element (9) is in the deployed position corresponding to thrust reversal.

3. Thrust reverser in accordance with Claim 2 characterised in that the said apertures (20) in the deflector (14) are associated with louvres (21) carried on the deflector (14) in such a way as to direct that part of the flow passing through the said apertures (20) in the desired direction.

4. Thrust reverser in accordance with Claim 3 characterised in that the said louvres (21) are hinged so as to be adjustable in accordance with the optimal direction desired for the orientation of the reversed

flow.

FIG:1

FIG:2

FIG:3

EP 0 301 955 B1